# EUROPEAN PATENT APPLICATION

(11) **EP 3 916 592 A1**
(43) Date of publication of application: **01.12.2021**
(21) Application number: 20177164.9
(22) Date of filing: 28.05.2020
(51) Int. Cl.: G06F 21/31, H04L 9/08

(54) **DISTRIBUTED DATA PROCESSING WITH SYSTEMS COMPRISING HSM, SE AND OTHER SECURE STORAGE ELEMENTS**

(71) Applicant: I4P-Informatikai Kft., 1125 Budapest (HU)
(72) Inventor: Cséplö , László, 1125 Budapest (HU); Rózsahegyi, Zsolt, 1026 Budapest (HU)
(74) Representative: Kacsuk, Zsófia

(57) **Abstract**

The present invention relates to a method for secure data management. The essence of the invention is to convert data, such as a file to be stored, a password used for authentication, a key of an AES cryptographic method, into a primary number sequence, decomposing the primary number sequence into n primary parts, transmitting the n primary parts to an IT device suitable for data storage, preferably to an IT device comprising an HSM, SAM or SE device, and storing the transmitted primary parts distributed in the respective IT devices as part of secure data management of even different entities.

In the case of authentication, the decomposed password is compared in a distributed manner with another decomposed password. In the case of AES encryption, the cryptography key stored in a distributed manner is used to encrypt the data to be encrypted, which may also be distributed.

## Description

The present invention relates to distributed data management using systems comprising HSM, SE and other secure storage elements.

One of the most important IT security challenge today is the solution of secure data storage. Secure data storage is primarily achieved through a secure IT environment (e.g. firewall, virus protection, anti-spyware protection, etc.), access restrictions (e.g. authentication-related access) and the encryption of the data to be stored. While these measures are useful, they do not provide complete protection, as, for example, virtually any password or encryption key can be recovered or broken with the physical theft of the storage medium and sufficient computing capacity. This poses a particularly serious risk for IT devices, which are regularly carried by the users, such as laptops, tablets, smartphones, thereby increasing the risk of theft or loss. IT devices that are not physically accessible but can be accessed remotely via the Internet or other communication channels are also at risk of IT intrusion and data theft.

In the context of the present invention, data means any digitally stored file, such as a data file (e.g., document, image file, audio file, video file), a password, a signing key, an encryption key, program code, and the like.

The objective of the present invention is to provide a safe method that is free from the disadvantages of prior art solutions. In particular, we aim to provide an IT solution that can reduce unauthorized data acquisition during data storage, password use and encryption.

The inventors have recognized that this can be achieved by distributed secure systems in which data is stored on a number of IT devices in a distributed manner. The inventors have also recognized that using a mathematical toolkit developed within the framework of secure multi-party computation, it is possible to perform operations such as authentication and encryption on decomposed data, so that the complete data (password or encryption key) never, not even during operations, appears in any of the IT devices used for storage, and therefore no complete data can be extracted from any one of the IT devices.

The inventors have also recognized that the secure system itself preferably includes secure IT devices that make the unauthorized extraction of stored data highly difficult. Examples of such secure IT devices are HSM (Hardware Security Module), SAM (Secure Access Module), SE (Secure Element).

The above objective of the invention is achieved by the method according to claim 1.

Preferred embodiments of the invention are defined in the dependent claims.

Further details of the invention will be described with reference to the accompanying drawings. In the drawing:
Figure 1 is a schematic flow diagram of an exemplary embodiment of the method according to the present invention for distributed data storage;
Figure 2a is a schematic flow diagram illustrating the storage of a password according to an exemplary embodiment of the method according to the invention for distributed authentication;
Figure 2b is a schematic flow diagram of authentication with the distributedly stored password illustrated in Figure 2a;
Figure 3a is a schematic flow diagram illustrating password storage of another exemplary embodiment of the method of the present invention for distributed authentication;
Figure 3b is a schematic flow diagram of authentication with the distributedly stored password illustrated in Figure 3a.

### DATA STORAGE

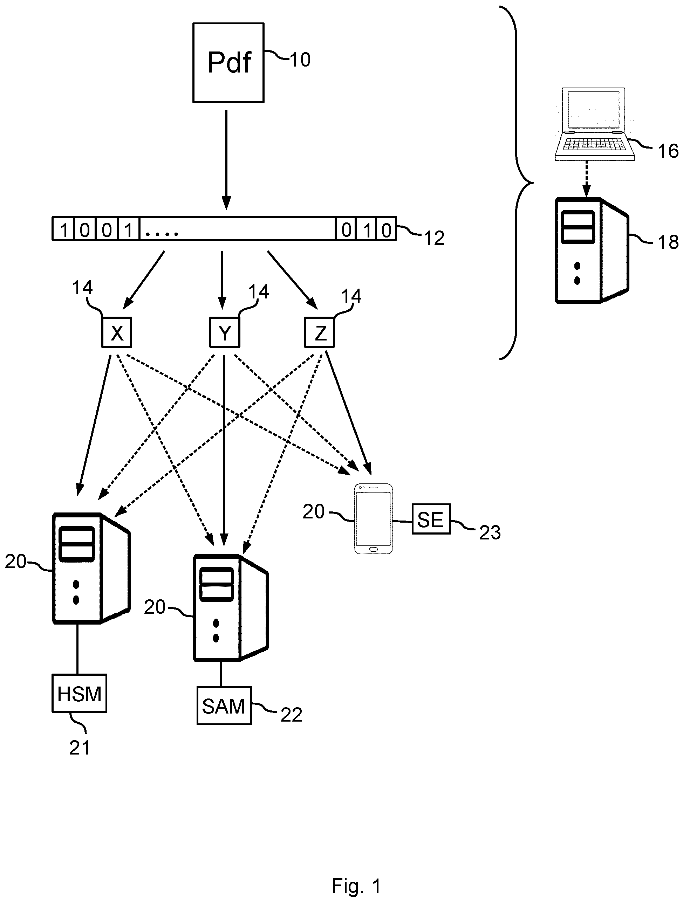

Fig. 1 shows an exemplary embodiment of a secure data management method according to the invention, in which data 10 is stored in a secure way. In the present example, the data 10 is a data file in pdf format, but of course the data 10 could be any other format or type of data file, such as an audio file, an image file, a video file, a program file, and so on.

In the method of the present invention, the data 10 to be securely stored is converted to a number sequence 12, such as a binary number sequence 12 comprising the binary values 0 and 1, as illustrated in Figure 1. Since all data 10 in a computer is stored in bits of binary value, an obvious way to convert data 10 into a number sequence 12 is to take a binary representation of the data 10 and consider it to be the number sequence 12. The original file can be accurately restored from the binary number sequence, since by entering the bits corresponding to the binary number sequence 12 into an IT data storage device, the data 10 itself is written into the data storage device.

After converting the data 10 into the number sequence 12, the number sequence 12 is decomposed into n parts 14, in the present example into three parts, denoted by the letters x, y, z in Fig. 1. Of course, the number sequence 12 can be decomposed into more than three or less (but at least two) parts 14. An invertible decomposition is used, which means that the original number sequence 12 can be recovered from the parts 14.

The number sequence 12 can be decomposed in many ways. Such a decomposition is, for example, an additive decomposition well known in mathematics, in which the sum of the n parts gives the original number sequence 12 or a numerical value obtained therefrom also in an invertible manner. The bitwise additive decomposition of the number sequence 12 into three parts is illustrated by the following example. Let the data 10 to be stored be the number 13. Number 13 can be written in binary form in 8 bits as: "00001101". The decomposition of the number "1" appearing at the LSB (least significant bit) into three parts is realized by generating two random numbers, and the third number is generated by subtracting the sum of the first two random numbers from the value of "1" to be decomposed, which can be written in the language of algorithms as follows: RND0.1; RND0,2; 1 - (RND0.1 + RND0.2). That is, e.g. a correct decomposition would be 2312, -432, - 1879 (just like an infinite number of other combinations).

The "0" valued at the 1st digit is decomposed into three parts, similarly: RND1,1; RND1,2; 1 - (RND1.1 + RND1.2), i.e. e.g. a correct decomposition can be 65, -987, 922. The decomposed parts are preferably also written as binary numbers, however, for the sake of brevity and easier comprehension, these are written here as numbers in the decimal number system.

A correct decomposition of the value "1" at the 2nd digit into three parts can be: 0, 1, 0.

A correct division of the value "1" at the 3rd digit into three parts can be: 101, -200, 100.

A correct division of "0" at the 4th digit into three parts can be: 963963, -5, -963958.

A correct division of "0" at the 5th digit into three parts can be: 9, 4, -13.

A correct division of "0" at the 6th digit into three parts can be: 66, -66, 0.

A correct division of "0" at the 7th digit into three parts can be: 3, -1, -2.

Thus, the result of decomposing the binary number sequence 12 is as follows:
- the first part 14 (marked with an x) is a series of the numbers 3, 66, 9, 963963, 101, 0, 65, 2312,
- the second part 14 (denoted by y) is a series of the numbers -1, -66, 4, -5, -200, 1, -987, -432,
- the third part 14 (denoted by z) is a series of the numbers -2, 0, -13, -963958, 100, 0, 922, -1879.

As mentioned above, the numbers that make up each of the parts 14 are also preferably in binary form, and are shown as numbers in the decimal number system only for the sake of brevity and ease of understanding.

This method is obviously applicable to division into arbitrary number of n>2 parts, where n-1 random numbers are generated.

It is also possible to not use real random numbers in the decomposition method, but instead numbers that have been obtained in some other way but seem equally random to external parties, such as numbers provided by the user.

Another possibility is that the decomposition is not done bit by bit, but by bit group, e.g. 4, 8, 2x8, etc. bits are treated as one number and decomposed into n pieces such that the sum of n pieces outputs these 4, 8, 2x8, etc. bits. Decomposition by bit group can significantly reduce the computational effort of the operation and thus the time required.

The advantage of a bit-by-bit or a bit-by-bit group decomposition is that after the decomposition, the parts 14 do not have self-interpretable pieces, i.e. not even a fragment of the original data 10 can be accidentally restored from any of the parts 14.

Naturally, in addition to the additive decomposition, other decompositions may be used, such as the polynomial decomposition, which is also well known to those skilled in the art, but which is not described in detail here because mathematically it is substantially more complex.

Many other variations and possibilities will be apparent to those skilled in the art.

Until now, operations can be performed using a client device 16, which can be any standard user IT device, such as a desktop computer, laptop, tablet, smartphone, and the like. An embodiment is also conceivable in which the data to be stored is transmitted from the client device 16 to a remote "trusted" IT device 18 via any known electronic wired and / or wireless communication channel, and the operations described above are performed by the trusted IT device 18. Such an IT device 18 may be, for example, a server, but any other device functioning as a server-side computer may be used for this purpose.

Following the decomposition of the number sequence 12, the n (in this case three) primary parts 14 are transmitted via any known electronic wired and / or wireless communication channel to n number of IT devices 20 suitable for data storage in such a way that that each IT device 20 receives one part 14. Each of the IT devices 20 can also be any conventional server, computer, laptop, tablet, smartphone, etc., which can be advantageously supplemented with some secure storage element, such as HSM 21, SAM 22, SE 23. In this sense, the HSM 21, the SAM 22, the SE 23 or another secure storage element is considered part of the IT device 20, which may be built-in (e.g. 23 SE integrated in the smartphone 20) or a separate element which can be accessed by the server or other computer-like device via a wired and / or wireless connection in a manner known per se. If the parts 14 are transmitted by the trusted IT device 18, after the transmission, the trusted IT device 18 preferably deletes the data 10 or the number sequence 12 produced therefrom, in order to make sure that the data 10 cannot be unauthorizedly extracted from the trusted IT device 18. Similarly, the data 10 and the number sequence 12 can be deleted from the client device 16 after transmission.

The received part 14 is stored in the IT devices 20. If the IT device 20 has a secure storage element, such as HSM 21, SAM 22, or SE 23, the given part 14 is stored therein to enhance security.

In a preferred embodiment, the storage is implemented redundantly, by which is meant that out of the n IT devices 20, k IT devices 20 are sufficient to recover the original data 10. In order to this, the parts 14 are further subdivided, and the IT devices 20 participating in the storage receive, in addition to the parts 14 stored therein, the decomposition of the parts 14 stored by the other IT devices 20. The required degree of redundancy (i.e., what is the minimum number k) determines how many subdivided parts 14 are created, and how many such subdivided secret parts are received by each IT device 20. The decomposition into subparts can be performed by the IT devices 20 themselves, also in a known manner, and each IT device 20 can forward the produced subparts to the other IT devices 20 (indicated by the dashed line in FIG. 1). Thus, none of the IT devices 20 have all (n) parts 14 necessary to restore the original number sequences 12. Additional protection is provided by including a non-obvious operation when converting the data 10 to a sequence of numbers 12, such as encrypting the data 10 first. In our experience, however, even without encryption, the bit-level bit-group-level decomposition and decomposed storage of the data 10 provides sufficient security.

An embodiment is also conceivable in which one of the IT devices 20 used for storage is the trusted IT device 18, which decomposes and transmits the data 10 to be securely stored to the other IT devices 20 and to its own data storage device, the latter being, for example, the mentioned HSM 21, SAM 22, or SE 23, or other secure storage element.

### Authentication

In a special embodiment of the secure data management method according to the invention, the data 10 is a password 11 which is used for authentication (identification). Secure data management in this case, in addition to the secure storage of the data 10, also includes authentication with the parts 14 stored in a decomposed, distributed manner, during which the client-side client device 16 that uses the password 11 is authenticated.

The password 11 is converted to a number sequence 12. In the case of a password 11, what generally counts is only the content of the alphanumeric information of the data 10, i.e., typically, it does not matter what font, format, or other appearance the alphanumeric password is stored in. In this case, the alphanumeric data 10 can be converted into a number sequence 12, for example, by means of an ASCII code table or any other code table. If the data 10 itself contains a sequence of numbers, then the conversion to a number sequence 12 may mean reading in this sequence of numbers. Thus, the number sequence 12 to be decomposed is not necessarily in binary format, but may of course be, and the decomposition may be bit by bit or by group of bits, as seen in the example above.

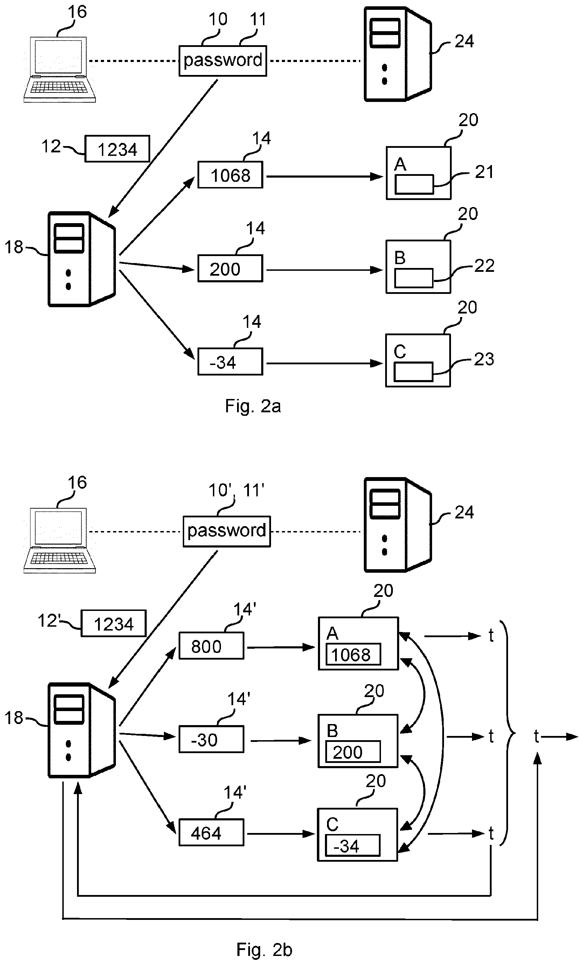

The number sequence 12 (or the password 11 itself) in this example is transmitted to the trusted IT device 18, which may or may not coincide with any of the IT devices 20 used for storage. The password 11 or the number sequence 12 can be sent to the trusted IT device 18 electronically, for example by means of the client device 16, the user of which subsequently wishes to authenticate himself with this password, either from this client device 16 or another IT device. The password 11 or number sequence 12 may also be sent by a server IT device 24 that generates the password 11 for the client device 16 or for the user of the client device 16. The dashed lines in Figure 2a refer to these two possibilities, but of course other possibilities can be obvious to the person skilled in the art.

In the embodiment shown in Fig. 2a, the password 11 is a four-digit number, in this example "1234", so the conversion to a number sequence 12 is the step of reading in this four-digit number from an electronic message containing the password 11 as data 10. To increase security, the password 11 is preferably sent encrypted to the trusted IT device 18, which first decrypts the received data packet.

In this embodiment, the trusted IT device 18 generates three primary parts 14 by additive decomposition using two random numbers (1068 and 200 in our example), these numbers being 1068, 200 and (-34), the sum of which is equal to 1234. It should be appreciated that bitwise or bit-group-wise decomposition in binary form could be used here as well, but for the sake of briefness and comprehensibility, in the present example a single decimal number has been decomposed additively into three parts 14.

The trusted IT device 18 transmits the decomposed primary parts 14 electronically (via a wired and / or wireless communication channel) to the storage IT devices 20, designated A, B and C in Figure 2a, which store the received one or more primary parts 14, preferably in their associated secure storage element (e.g. HSM 21, SAM 22, SE 23). In this case, too, the trusted IT device 18 may be the same as one of the storage IT devices 20, in which case the trusted IT device 18 transmits one of the primary parts 14 to its own data storage element.

Naturally, the storage of the primary parts 14 can also take place redundantly, as previously described.

The trusted IT device 18 does not store the received password 11 or the number sequence 12 obtained therefrom, it stores at most one of the primary parts 14, or additional subparts necessary to achieve redundancy, if the trusted IT device 18 is one of the storage IT devices 20.

With this, the system is prepared for later authentication.

The authentication process is illustrated in Fig. 2b. The trusted IT device 18 receives a password 1 1' to be authenticated, which is sent, for example, by the client device 16, but of course this may come from elsewhere, such as from the server IT device 24, which forwards the password 11' received from the client device 16 for authentication. This is indicated by the dashed lines in Figure 2b.

The password 11' as data 10' is authenticated together by the IT devices 20 by means of the parts 14 stored therein, without any of the IT devices 20 reproducing either the original password 11 or all n primary parts 14 thereof or the password 11' to be authenticated.

In order to do this, the obtained 11' password is again converted into a number sequence 12' and decomposed to n (in this case three) secondary parts 14' by means of the trusted IT device 18. The trusted IT device 18 preferably uses the same decomposition algorithm with other random numbers, in this case additive decomposition with, for example, random numbers 800 and (-30).

In the present example, the resulting secondary parts 14' are 800, (-30) and 464, the sum of which is 1234.

By means of the trusted IT device 18, the secondary parts 14 are transmitted to at least one of the IT devices 20 such that a maximum of only n-1 secondary parts are transmitted to any one of the participating IT devices. In the embodiment shown in Fig. 2b, only one secondary part 14' is transmitted to each IT device 20.

If the trusted IT device 18 coincides with one of the storage IT devices 20, then the trusted IT device 18 forwards at least one and at most n-1 secondary parts 14' to its own internal algorithm.

In the following, it is determined by means of the IT devices 20 whether the value (in this case the sum) of the decomposed primary parts 14 is equal to the value (in this case the sum) of the secondary parts 14'. To do this, we use a known mathematical algorithm for determining the equality of the shared secrets, in which both the primary parts and the secondary parts are kept secret, i.e. no part 14 or 14' that is not originally sent to the given IT device 20 becomes known in any of the IT devices 20, so that neither the number sequence 12 generated from the original password 11 nor the number sequence 12' generated from the password 11' to be authenticated can be restored in any of the IT devices 20, and thus the passwords 11 and 11' cannot be reconstructed. Such a mathematical algorithm for determining the equality of shared secrets can be found, for example, in the following article:
"Multiparty Computation for Interval, Equality, and Comparison without Bit-Decomposition Protocol", Takashi Nishide, Kazuo Ohta (https://www.iacr.org/archive/pkc2007/44500343/44500343.pdf).

Of course, other similar algorithms can be used that compare decomposed stored secrets without generating the secret itself (in this case the sum of the parts 14, i.e. the number sequence 12) or the decomposed parts of the secret (i.e. the primary parts 14 or the secondary parts 14') would be exposed to the other participants (i.e. to IT devices 20 that do not store the given part 14, 14'). Such algorithms assume active communication between the participating IT devices 20 without revealing the primary and secondary parts 14, 14'. Depending on the algorithm used, the result of the decision (i.e. whether the two values are equal or not equal, i.e. 1 or 0) can be known by all IT devices 20 involved in the decision, or the decision itself is distributed within the IT devices 20, thus, neither participant alone knows the outcome of the decision. The latter can be useful when the end result of the decision is the input of further operations. For simplicity, Fig. 2b illustrates an algorithm in which each participating IT device 20 independently decides about the result of the authentication of the secondary part 14' sent thereto, which in the present example may take a true ("i") or false ("h") value. In this case, each authentication result has a value of "true", denoted by the letters "i" in Fig. 2b. In this embodiment, full authentication will be successful if each (or, in the case of redundant decomposition, the minimum k required for decision-making) participant IT device 20 authenticates the secondary part 14' it received, marked with the letter "i" and indicated on the right side of Fig. 2b. The result of the authentication can be sent to a party requesting authentication, such as the server IT device 24, which will grant access or other privileges to the user of the client device 16.

It is also possible to use redundancy in this embodiment. The advantage of the redundant data storage or authentication option is that the password 11' can be authenticated in the event of a failure or other loss of one (possibly several, at most n-k) IT devices 20.

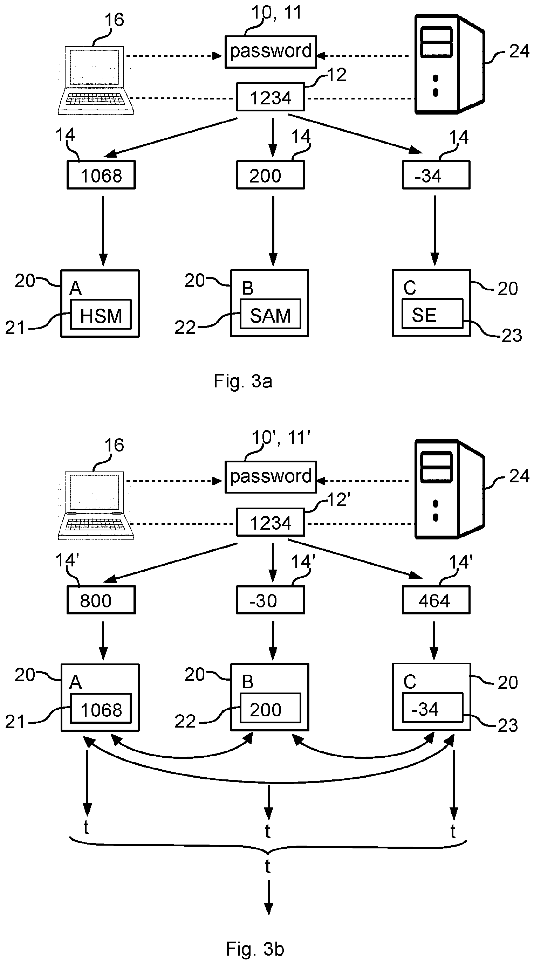

An embodiment is also possible in which the conversion and decomposition of the original password 11 and / or the password 11' to be authenticated into a number sequence 12 or 12' is performed by the client device 16 itself, which sends the primary parts 14 and the secondary parts 14' to the IT devices 20 involved in the storage and authentication, as illustrated in Figs. 3a and 3b, respectively. Another possibility is that the conversion and decomposition of the original password 11 and / or the password 11' to be authenticated into number sequence 12 or 12' is performed by the previously mentioned server IT device 24 (e.g. which generates the original password 11 and later authenticates the client device 16). The advantage of this method is that there is no need for a separate trusted IT device 18. In the IT devices 20, the storage and authentication can be performed in the same way as previously described.

### AES ENCRYPTION

In this embodiment, the method according to the invention is used for encryption, in particular for encryption with the AES algorithm. AES Advanced Encryption Standard is an encryption standard for encrypting electronic data.

### 1. Decomposed extraction of a value in a public table based on the decomposed index of the table.

Let us take a table with 2^{N} elements, the elements of which can be referenced by their index (hereinafter M) (indices from 0 to 2^{N-1}, the tables T0, T1, T2, T3 used in the AES algorithm have 256 elements, i.e. for these tables N = 8).

Bitwise decomposition of a number: let us write the number in binary form, and decompose the value 1 or 0 of each digit of the binary form into P parts in such a way that if the P parts are added together then we get the initial value of 1 or 0 (in the case of additive decomposition "addition" really means addition, in the case of other decomposition methods, e.g. in the case of polynomial decomposition, the "addition" of sub-values is a set of more complex operations).

Example: The bitwise decomposition of the number 13 into P = 3 parts by additive decomposition is carried out in the following way:
- the number 13 written in binary form on 8 bits is: "00001101",
- the decomposition of the value "1" at the LSB (least significant bit) into 3 parts is: RND_{0,1}, RND_{0,2}, 1 - (RND_{0,1} + RND_{0,2}), for example, a correct decomposition could be: 2312, -432,
- 1879 (as well as an infinite other combinations),
- the decomposition of the value "0" at the 1st digit into 3 parts is: RND_{1,1}, RND_{1,2}, 1 - (RND_{1,1} + RND_{1,2}), for example, a correct decomposition could be: 65, -987, 922,
- a correct decomposition of "1" at the 2nd digit into 3 parts is: 0, 1, 0,
- a correct decomposition of "1" at the 3rd digit into 3 parts is: 101, -200, 100,
- a correct decomposition of "0" at the 4th digit into 3 parts is: 963963, -5, -963958,
- a correct decomposition of "0" at the 5th digit into 3 parts is: 9, 4, -13,
- a correct decomposition of "0" at the 6th digit into 3 parts is: 66, -66, 0,
- a correct decomposition of "0" at the 7th digit into 3 parts is: 3, -1, -2.
The values stored by the three participants are therefore:
- by the 1st participant: 3, 66, 9, 963963, 101, 0, 65, 2312,
- by the 2nd participant: -1, -66, 4, -5, -200, 1, -987, -432,
- by the 3rd participant: -2, 0, -13, -963958, 100, 0, 922, -1879.

The index M is stored by the P number of IT devices 20 in a (bitwise) decomposed form, each IT device 20 knows only its own part 14 and will only work with that part 14.

Let us calculate the value of 2^{M}, where M exists only in a decomposed form, i.e., the specific value of M is not known by any of the IT devices 20.

To do this, take the known "Square and multiply" algorithm, cf. Efficient Distributed Computation Modulo a Shared Secret (Contemporary Cryptology, Birkhäuser Verlag, ISBN 3-7643-7294-X), Dario Catalano, (hereinafter: Catalano) Figure 5, The basic (non distributed) Square and Multiply algorithm; or cf. also https://en.wikipedia.org/wiki/Exponentiation_by_squaring.

Example: Calculating 2¹³ with the Square and multiply algorithm
- 13 written in binary form on 8 bits: "00001101"
- 2¹³ = 2⁰ x 2⁰ x 2⁰ x 2⁰ x 2⁸ x 2⁴ x 2⁰ x 2¹ = 2⁸ x 2⁴ x 2¹ = 8192

In the present case, none of the IT devices 20 knows the value of M, i.e. we have to transform the "Square and multiply" algorithm so that the exponentiation can also be carried out with a bitwise decomposed exponent, which can be found here: Catalano, Figure 6 (A distributed version of the Square and Multiply algorithm). As a result of the process with the decomposed exponent, the power (i.e., the value of 2^{M}, 2¹³ in our example) will also be decomposed.

Now let us take the decomposed power value (2^{M}) and let us write the P parts of sub-values in binary form on 2^{N} digits. If we were to reveal these sub-values and add them up in binary form, we would get that only one of the 2^{N} bit values is 1, namely the Mth digit.

Example:
- The decomposed 2¹³ (i.e. 8192) may be distributed between the three IT devices 20, for example in this way: 6666, 123, 1403.
- The above sub-values are written in binary form: 1101000001010, 1111011, 10101111011.
- If we reveal the binary written sub-values and add them up in binary form we get:

| |
|---|
| 00 ... 0001101000001010 |
| 00 ... 0000000001111011 |
| 00 ... 0000010101111011 |
| 00 ... 0010000000000000 |

The participants then take the 2^{N}-element public table and multiply each of its elements by the corresponding bit value of the 2^{M} value (containing only one "1" at the Mth digit), which is represented in binary form on 2^{N} digits and stored in a distributed manner, whereby the element of the table having index M is obtained (in a decomposed manner) in the IT devices 20. To multiply a public constant value by a shared secret, see the algorithm of Catalano Article 4.1.1 (Multiplication or addition of a constant (public) value and a polynomially shared secret).

### 2. Distributed AES operations

Using the above method, two basic AES operations are presented in the following, which include a key, data, and an operation forming an index therefrom and extracting data from a public table based on the formed index. Then the modified operation is presented using a decomposed key and data, which may also be decomposed, using the table with decomposed index. Other AES operations using the original and shared key (e.g., key expansion before decryption, decryption, etc.) are based on the same principles.

### 2.1. AES key extension before encryption:

The user's secret key (stored traditionally, in an undistributed manner): The user has a 128-bit secret key, which is stored in an undecomposed form and which serves to perform operations with it.

First step: We take the user's 128-bit secret key and take the 3rd highest digit byte from the 4 highest digit bytes (i.e. the 113th to 120th bits of the secret key), which is used as an index, and the corresponding element is taken from the table T4 (Table Te4 in the AES reference code, see the function "int rijndaelKeySetupEnc" of the reference code available in: https://fastcrypto.org/front/misc/rijndael-alg-fst.c).

Next steps: Using the additional selected bytes of the secret key as an index, additional elements are selected from the Te4 table, they are XOR-combined with each other and with the first 4 bytes of the secret key, over several cycles. Index-based table element extraction based on the AES-128 algorithm happens approx. 40 times, before the expanded key required for encryption is generated from the user's original secret key.

The end result is a 256-bit long key expanded for encryption with the AES-128 algorithm.

### 2.2. AES key expansion before encryption with user key decomposed into P number of parts 14:

The data 10 stored distributedly in a decomposed form (optionally redundantly) in this case is the user's secret key: The user's 128-bit secret key is stored in a bitwise (e.g. additive or polynomial) decomposition, the secret key is either generated in this way or it is distributed among the P number of IT devices 20 by a trusted dealer (which can be one of the IT devices 20 or a 3rd party). Thus, each device has 128 integers in a list, so that by adding the elements of a given sequence number of the lists of the different devices the value of the bit (1 or 0) having the same sequence number of the user key would be obtained.

First step: Each of the IT devices 20 takes the element of the table T4 (table Te4 in the AES reference code) corresponding to the 113th to 120th bits of the bitwise decomposition of the user's secret key as a decomposed index (the number 13 in the above examples), which is obtained by the above method describing the decomposed extraction of a value in a public table based on the decomposed index of the table.

Next steps: As with the original AES, the following steps include through several cycles the XOR operations of the table elements extracted based on further details of the key parts.

Outcome: 256-bit, expanded key for AES-128 encryption, stored in a bitwise decomposition (i.e., 256 large numbers by each of the P number of participants).

### 2.3. AES encryption with a traditional, undecomposed key:

First step: We take the lowest 32 bits of the expanded key for encryption and XOR-combine it with the lowest 32 bits of the data (such as a document or other file) to be encrypted. Using the highest byte of this value as an index, we take the corresponding element of the Te0 table.
Next steps: Further substitutions and XOR operations follow using the next 32-bit blocks of the expanded key and data.
Outcome: A set of 128-bit long encrypted blocks.

### 2.4. AES encryption with user key decomposed into P number of parts 14:

First step: We take the first 32 elements of the stored decomposed expanded key (i.e., the 256 large numbers stored at the P number of participants) and the first 32 bits of the data to be encrypted (which is not the same as the data 10) and XOR-combine them using the appropriate multi-party computation algorithm, and then, based on the resulting decomposed index, retrieve the element with the given index from the Te0 table. The data to be encrypted itself can be decomposed, in which case its first 32 numbers and the first 32 elements of the stored decomposed expanded key are taken and XOR-combined using the appropriate multi-party computation algorithm, and then based on the decomposed index, we retrieve the element with the given index from the Te0 table in this case as well. In both cases, for a suitable multi-party computation algorithm, see for example, the algorithms in Section 4.1 (Logical Bit Operations) and 5.1 (Ripple-Carry Addition) of http://www.cs.au.dk/∼tpj/uni/thesis/report.pdf.

Next steps: Further substitutions and distributed XOR operations follow from decomposed index tables using the next 32-bit decompositions of the decomposed extended key and the data to be encrypted (which may also be decomposed).

The end result: The set of encrypted blocks stored in a bitwise decomposed, which, after being revealed and combined, produces a set of 128-bit long encrypted blocks (i.e. the input data encrypted with the user's secret key).

In a particularly preferred embodiment, the IT devices 20 comprise HSMs 21, SAMs 22 and / or SEs 23, and the distributed AES algorithm described above is performed by the HSMs 21, SAMs 22 and / or SEs 23. With this, practically, "distributed HSM" / "distributed SAM" / "distributed SE" is created, since the key management and encryption operation, which is usually performed with one HSM / SAM / SE, is distributed over several HSMs 21, SAMs 22 and / or SEs 23, which significantly increases the security compared to the use of a single HSM 21, SAM 22 or SE 23.

With the distributed storage of the user key, several beneficial effects can be achieved. Examples include:
- Distributing the key to multiple cooperating devices / systems can increase security, as taking over one device is not enough to obtain the key. Security also increases in the sense that the complex mathematics used in the calculation greatly complicates / makes impossible a variety of side-channel attacks, in which the attacker could infer the currently performed operation of the computer and ultimately the key involved in the operation, based on the change in energy consumption, the measurement of electromagnetic radiation, the power capacitor sound, and so on.
- Redundancy is made possible with keys stored in multiple cooperating devices / systems (k out of n devices are enough to use the key), which increases availability because the loss of one or a certain number of few devices does not prevent the provision of services.
- By distributing the parts of the key within a device / system or into several cooperating devices / systems and making the parts available to different participants, even opposing participants, it can be ensured that these participants can only perform a single cryptographic operation jointly (in case of redundant distribution k-out-of-n).

With a key that is decomposed and made available to several different entities (parties), many advantageous applications can be realized. Examples include:
- Joint notaries (who may even be counterparties) authorized to act on behalf of a company can jointly certify a company commitment on behalf of the company (e.g. an insurance contract signed by the insurer as a company, and not two administrators), in this case a key stored distributedly in a decomposed form can be used for joint authentication, each notary holding one part of the decomposed key.
- With the decomposed key, it can be ensured that the organization managing personal information (PII, i.e. Personally Identifiable Information) can open the encrypted data only together with the PII holder prior to any use of the data. In order to ensure availability, it is worth using k-out-of-n key distribution here as well, and to involve another party, a trusted service provider, with whom they can ensure in a 2-out-of-3 way that a possibly lost key part (e.g. a non-cooperating party) may not prevent the joint operation from being carried out.
- The decomposed key can be used in an electronically interpretable, multi-phase "manufacturing" process. Examples of such multi-phase processes include software development, quality control, and release; photographing, retouching and copyright registration; acquisition, orchestration and copyright registration of a musical work.
- In general, with the help of a decomposed key, even opposing parties (counterparties) can jointly perform a single (cryptographic) operation required by any legal or technical constraint, necessity.

Various modifications to the above disclosed embodiments will be apparent to a person skilled in the art without departing from the scope of protection determined by the attached claims.

## Claims

1. A method for secure data management, **characterized by**
- converting the data to a primary number sequence,
- decomposing the primary number sequence into n primary parts,
- transmitting the n primary parts to an IT device suitable for data storage, preferably to an IT device comprising an HSM, SAM or SE device, and distributedly storing the transmitted primary parts in the respective IT devices as part of the secure data management.

2. The method of claim 1, wherein the data is a key of an AES cryptographic method, and performing an AES algorithm by the IT devices using the distributedly stored key by distributedly generating indexes of tables of the AES algorithm from the decomposed key, distributedly extracting the indexed table element of the tables in the given AES algorithm using the decomposed index, and performing the next step of the AES algorithm with the decomposed table element.

3. The method according to claim 2, **characterized in that** the data to be encrypted is also stored distributedly, and after extracting the decomposed table element, the next step of the AES algorithm is performed distributedly with the decomposed table element.

4. The method according to claim 2 or 3, **characterized in that** the IT devices comprise HSM, SAM and / or SE and the AES algorithm is performed with the HSM, SAM and / or SE devices.

5. The method according to any one of claims 2 to 4, **characterized in that** the primary parts of the distributedly stored key are made available to different entities for joint use.

6. The method of claim 1, **characterized in that** the data is a first password for authentication and as part of the secure data management authenticating a client device that uses a second password with the distributedly stored primary parts by:
- converting the second password to a secondary number sequence,
- the secondary number sequence is decomposed into m secondary parts,
- transmitting each of the m secondary parts to one of the IT devices,
- deciding with the IT devices whether the value of the distributedly stored primary parts are equal to the value of the secondary parts using an algorithm for deciding the equality of shared secrets, which keeps both the primary parts and the secondary parts secret, and in case of equality, authenticating the client device that uses the second password.

7. Method according to claim 6, **characterized in that** the second password is converted into the secondary number sequence and decomposed into the secondary parts by a trusted IT device, and transmitting by the trusted IT device each of the m secondary part to one of the IT devices used for data storage.

8. Method according to claim 7, **characterized in that** one of the IT devices used for data storage is the trusted IT device, and one of the secondary parts is transmitted to the trusted IT device's own internal algorithm

9. The method of claim 6, **characterized by** converting the second password to the secondary number sequence and decomposing it into the secondary parts by a client-side device requesting authentication, and each of the m secondary parts are transmitted to one of the IT devices by the client-side device.

10. The method according to any one of claims 1 to 9, **characterized in that** the primary parts are stored redundantly in such a way that a number of n IT devices store n number of data parts from which the data parts stored in a number of k<n IT devices are sufficient to restore the complete data.

11. The method according to claim 10, **characterized in that** the primary parts are further decomposed into subparts and the IT devices participating in the storage receive subparts of the primary parts stored by the other IT devices in addition to the primary part stored in the given IT device.

12. The method according to any one of claims 1 to 11, **characterized by** using an additive or polynomial distribution by bits or group of bits.
